# EUROPÄISCHE PATENTSCHRIFT

(11) **EP 2 476 920 B1**
(45) Veröffentlichungstag und Bekanntmachung des Hinweises auf die Patenterteilung: **17.07.2019**
(21) Anmeldenummer: 12150899.8
(22) Anmeldetag: 12.01.2012
(51) Int. Cl.: F16B 27/00, B25B 23/04

(54) **Magazinstreifen zur Aufnahme von Befestigungselementen**
Cartridge strip for receiving fixing elements
Ruban de stockage destiné à la réception d'éléments de fixation

(30) Priorität: 17.01.2011 DE 102011002783
(43) Veröffentlichungstag der Anmeldung: 18.07.2012
(73) Patentinhaber: EJOT Baubefestigungen GmbH, 57334 Bad Laasphe (DE)
(72) Erfinder: Weber, Dr. Jens O., 57250 Netphen (DE); Angar, Yasir, 33332 Gütersloh (DE); Blank, Gerhard, 35216 Biedenkopf (DE); Geßner, Marco, 57319 Bad Berleburg (DE); Gödecke, Frank, 35216 Biedenkopf (DE)
(74) Vertreter: Hohgardt, Martin

(56) Entgegenhaltungen:
- EP-A2- 0 903 203
- EP-A2- 1 182 365
- DE-A1- 10 213 219

## Beschreibung

Die vorliegende Erfindung betrifft einen Magazinstreifen für die Aufnahme von Befestigungselementen, insbesondere Schrauben, wobei der Magazinstreifen in eine Zuführeinrichtung eines Befestigungselement-Setzgeräts einsetzbar ist, mittels welchem die Befestigungselemente in einen entsprechenden Untergrund eingebracht werden.

Aus der DE 102 13 219 A1 ist ein Magazinstreifen mit einem C-förmigen Profil zur Lagerung von Schrauben bekannt, welcher an seinen Längsenden eine Verliersicherung aufweist, welche das Austreten von Schrauben aus den Längsendöffnungen des Magazinstreifens verhindert. Die Verliersicherung weist ein im Wesentlichen senkrecht zu den Seitenwänden wirkendes Federelement auf, das zumindest teilweise die lichte Weite des Aufnahmeraums verengt. Die Zuführvorrichtung eines entsprechenden Setzgeräts wirkt dabei mit der Verliersicherung zusammen. In einer Variante wird dabei die Verliersicherung durch elastische Kunststoffseitenwände mit nach innen gerichteten Einkerbungen gebildet, wobei sich bei Krafteinwirkung durch eine Schraube die Seitenwand im Bereich der Einkerbungen nach außen dehnt, so dass die Schrauben aus dem Aufnahmeraum heraustreten können. Gemäß einer anderen Variante wird die Verliersicherung durch elastische Kunststoffseitenwände mit parallel zur Rückwand verlaufenden Klemmstegen gebildet, wobei die Klemmstege im Wesentlichen quer zu den Seitenwänden ausschwenkbar sind und so die Schrauben freigeben. In einer weiteren Variante wird die Verliersicherung durch gegeneinander vorgespannte Seitenwände gebildet, welche den Schaft der Schraube zumindest teilweise reibschlüssig festklemmen. Durch eine in Längsrichtung wirkende Kraft ist diese reibschlüssige Verbindung überwindbar und die Schrauben können aus dem Magazinstreifen heraus transportiert werden. In der EP 0 903 203 B1 wird ein Befestigungsmittel-Kollationierungsrohr zum Halten einer Vielzahl von Schrauben beschrieben, welches in einem entsprechenden Setzgerät verwendbar ist. Das Rohr umfasst ein längliches Körperelement mit einem im Wesentlichen T-förmigen Kanal, an dessen Enden elastische Vorsprünge zum Blockieren der Schraubenköpfe eingestanzt oder eingeschnitten sind, welche in den Kanal herein gedrückt werden. Das Setzgerät umfasst einen Rohrhalter in welchen das Rohr einbringbar ist. In den Rohrhalter erstrecken sich Zacken, welche sich ggf. auch in den Kanal des (eingebrachten) Rohrs erstrecken. Die Zacken sind in der Lage, die elastischen Vorsprünge aus dem Kanal heraus zu biegen, so dass die Schrauben aus dem Rohr freigegeben werden können. Des Weiteren ist eine Zacke vorgesehen, welche mit der Oberseite der Endwand des Rohrs in Eingriff bringbar ist, um die Endwand relativ zu der Endwand des Magazinschlitzes auszurichten, um eine Blockierung der Schrauben durch die Endwand zu verhindern.

Die bekannten Lösungen sind zum Teil aufwendig in der Herstellung und können nicht immer ein Verkanten bzw. Schiefstellen der Schraube während des Entriegelungsvorgangs verhindern, was insbesondere durch einen Kontakt des Entriegelungsmechnismus mit dem Schraubenkopf im Magazinstreifen hervorgerufen wird. Bei der Verwendung von Schrauben mit auf den Schaft aufgesetzten Dichtscheiben, welche einen größeren Durchmesser als die Schraubenköpfe aufweisen, haben sich bei den bekannten, den Schraubenkopf umfassenden, Magazinstreifen zudem Vorschubprobleme durch sich übereinander schiebende Dichtscheiben bemerkbar gemacht.

Es ist daher die Aufgabe der vorliegenden Erfindung, einen günstig zu produzierenden Magazinstreifen bereitzustellen, der zuverlässig einen störungsfreien Übergang der Schrauben aus dem Magazinstreifen in die Zuführeinrichtung des Setzgeräts gewährleistet. Des Weiteren soll für den Fall der Verwendung von Schrauben mit aufgesetzten Dichtscheiben, welche regelmäßig einen größeren Durchmesser aufweisen als die Schraubenköpfe, eine Anordnung bereitgestellt werden, welche ein Aufschuppen der Schrauben während der Vorschubbewegung im Magazinstreifen verhindert, so dass ein insgesamt besserer Vorschub erzielt werden kann.

Diese Aufgabe wird erfindungsgemäß gelöst durch einen Magazinstreifen zur Aufnahme von Befestigungselementen mit Befestigungselementköpfen und Befestigungselementschäften, welcher in eine Zuführeinrichtung eines Befestigungselement-Setzgerätes einsetzbar ist und welcher eine Basiswand sowie zwei sich von der Basiswand im Wesentlichen senkrecht erstreckende Seitenwände, deren freie Enden zu zwei einander gegenüberliegenden Rändern abgewinkelt sind, aufweist wobei ein Aufnahmeraum für die Befestigungselementköpfe und ein Durchgangsspalt für die Befestigungselementschäfte gebildet wird, und wobei die Basiswand an zumindest einem Endabschnitt des Magazinstreifens ein elastisch federndes Sperrglied aufweist, welches von einem korrespondierenden Betätigungsmittel der Zuführvorrichtung des Befestigungselement-Setzgerätes betätigbar ist, wobei das Sperrglied im unbetätigten Zustand in den Aufnahmeraum hineinragt und die Befestigungselemente im Magazinstreifen zurückhält und wobei das Sperrglied im betätigten Zustand von dem Betätigungsmittel aus dem Aufnahmeraum hinausgedrängt wird und die Befestigungselemente freigibt, wobei sich von der Basiswand eine mittig angeordnete Erhöhung, auf welcher die Köpfe der Befestigungselemente aufliegen, in den Aufnahmeraum hinein erstreckt, welche in ihrer Höhe derart bemessen ist, dass die Befestigungselemente das Sperrglied und das Betätigungsmittel im betätigten Zustand sicher überwinden können.

In einer bevorzugten Ausführungsform der Erfindung entspricht die Höhe der Erhöhung zumindest der Höhe des Betätigungsmittels. Hierdurch wird sichergestellt, dass die Befestigungselement- bzw. Schraubenköpfe bei der Betätigung des Sperrglieds durch das Betätigungsmittel der Zuführeinrichtung des Setzgeräts nicht in Kontakt mit dem Betätigungsmittel kommen können und so störungsfrei in die Zuführeinrichtung des Setzgeräts gleiten können.

In einer weiteren bevorzugten Ausführungsform der Erfindung ist das elastisch federnde Sperrglied einstückig mit dem Magazinstreifen ausgebildet. Besonders bevorzugt weist dabei das elastisch federnde Sperrglied zumindest eine aus der Ebene der Basiswand ausgestanzte Zunge auf. Hierdurch kann das Sperrglied bzw. die Zunge bei der Betätigung durch das Betätigungsmittel wieder in die Ebene der Basiswand zurückgedrängt werden, so dass es bzw. sie keinen Platz mehr im Aufnahmeraum des Magazinstreifens beansprucht. Es können natürlich auch zwei Zungen, z. B. auf jeder Seite der Erhöhung, vorgesehen sein. Das Betätigungsmittel wird in der Regel als ein (bzw. zwei) flache, längliche Zacke(n) aus einem starren Material ausgebildet. Es ist allerdings auch denkbar, dass das Sperrglied als separate Komponente aus einem flexiblen und/oder komprimierbaren Material, z.B. in Form einer Rampe oder eines Nippels, auf die Innenfläche der Basiswand aufgebracht ist, wobei das Betätigungsmittel das Material zusammendrücken kann. Dann müsste entsprechend die Höhe der Erhöhung so bemessen werden, dass sie mindestens so groß ist wie die Höhe des zusammengedrückten Sperrgliedmaterials plus der Höhe des Betätigungsmittels.

In einer anderen bevorzugten Ausführungsform der Erfindung sind der Aufnahmeraum und die Erhöhung derart aufeinander abgestimmt sind, dass sich eine Dreipunktlagerung für die Befestigungselement- bzw. Schraubenköpfe (welche regelmäßig einstückig damit ausgebildete Unterlegscheiben aufweisen) einstellt. Dadurch, dass die Befestigungselementköpfe einmal mit ihrer Oberseite auf der Erhöhung aufliegen sowie jeweils seitlich mit den Unterlegscheiben an den beiden Seitenwänden (bzw. den Übergängen der Seitenwände zu den abgewinkelten freien Enden), kann eine besonders gut definierte Führung der Befestigungselemente bzw. Schrauben im Magazinstreifen erzielt werden.

In einer noch weiteren bevorzugten Ausführungsform der Erfindung erstreckt sich die Erhöhung über die gesamte Länge des Magazinstreifens, so dass eine einheitliche Führung der Befestigungselemente bzw. Schrauben bis in die Zuführeinrichtung des Setzgeräts gewährleistet ist.

Anhand der Zeichnungen wird der erfindungsgemäße Magazinstreifen veranschaulicht. Es zeigen:
- Fig. 1:: eine perspektivische Ansicht des Profils eines erfindungsgemäßen Magazinstreifens ohne Befestigungselemente und ohne Sperrglied;
- Fig. 2:: eine perspektivische Ansicht eines erfindungsgemäßen Magazinstreifens mit eingebrachten Schrauben und mit Sperrglied;
- Fig. 3:: eine Frontansicht des erfindungsgemäßen Magazinstreifens entsprechend Pfeil P in Fig. 2;
- Fig. 4:: eine Seitenansicht eines Magazinstreifens mit bevorzugter Anordnung der Dichtscheiben.

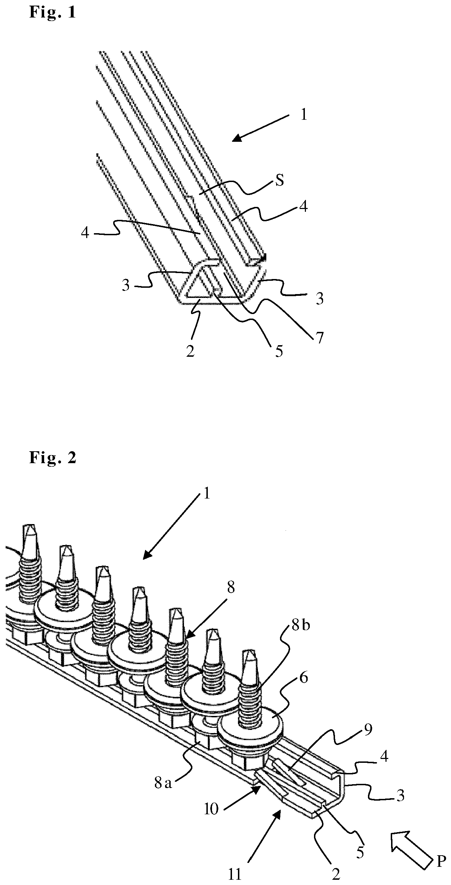

In **Fig. 1** wird der erfindungsgemäße Magazinstreifen 1 aus Gründen der Anschaulichkeit im Profil ohne eingeführte Schrauben sowie ohne Endabschnitt dargestellt. Der Magazinstreifen weist eine Basiswand 2 sowie zwei sich von der Basiswand 2 im Wesentlichen senkrecht erstreckende Seitenwände 3, deren freie Enden 4 zu zwei einander gegenüberliegenden Rändern abgewinkelt sind, auf. Die freien Enden 4 erstrecken sich regelmäßig im Wesentlichen senkrecht von den Seitenwänden 3 nach innen. Die Basiswand 2, die Seitenwände 3 und die freien Enden 4 der Seitenwände 3 bilden zusammen einen Aufnahmeraum 7 für die Schraubenköpfe und die freien Enden 4 bzw. die beiden einander gegenüberliegenden Ränder bilden einen Durchgangsspalt S für die Schraubenschäfte. Etwa in der Mitte der Basiswand 2 des Magazinstreifens 1 ist eine Erhöhung 5 ausgebildet, welche sich regelmäßig entlang der gesamten Länge des Magazinstreifens 1 erstreckt und eine Auflage für die Schraubenköpfe bildet. Die Erhöhung 5 ist regelmäßig als durchgehender Steg mit einer waagrechten Oberfläche ausgebildet, auf welcher die Köpfe der Schrauben sicher gleiten können. Die freien Enden 4 bzw. Ränder schließen üblicher Weise mit einer senkrechten Fläche ab, sie können allerdings auch abgerundet sein. Der Magazinstreifen 1 ist normaler Weise einstückig ausgebildet. Als Materialien für den Magazinstreifen 1 werden Kunststoff und/oder Metall verwendet.

In **Fig. 2** wird der erfindungsgemäße Materialstreifen 1 nun mit eingeführten Schrauben 8 sowie mit einem Endabschnitt 11 dargestellt. Auf die Schraubenschäfte 8b sind in hoch-tief versetzter Anordnung Dichtscheiben 6 aufgebracht. Diese Anordnung wird weiter unten ausführlicher erläutert. Die Basiswand 2 des Magazinstreifens 1 weist am Endabschnitt 11 ein elastisches federndes Sperrglied 10 in Form von zwei aus der Basiswand 2 ausgestanzten Zungen 9 auf, welche links und rechts von der Erhöhung 5 angeordnet sind und derart in den Aufnahmeraum 7 hinein ragen, dass sie die Schraubenköpfe 8a blockieren und die Schrauben 8 so in dem Magazinstreifen zurückhalten. Die Zungen 9 sind durch korrespondierende Betätigungsmittel einer Zuführvorrichtung eines Setz- bzw. Schraubgerätes (nicht gezeigt) betätigbar, wobei die Zungen 9 im unbetätigten Zustand, wie gezeigt, in den Aufnahmeraum 7 hinein ragen. Im betätigten Zustand (nicht gezeigt) werden die Zungen von dem Betätigungsmittel aus dem Aufnahmeraum 7 hinaus gedrängt, d.h. zurück in die Ebene der Basiswand 2, so dass die Schrauben 8 freigegeben werden. Die Betätigungsmittel sind regelmäßig als flache, längliche Zacken aus einem starren Material, vorzugsweise Kunststoff oder Metall gebildet und werden jeweils links und rechts von der Erhöhung 5 über die Zungen drübergeschoben, wenn der Magazinstreifen mit seinem Endabschnitt 11 in die Zuführvorrichtung des Schraubgeräts eingesetzt wird. Das Sperrglied 10 bzw. die zwei Zungen 9 können an beiden Endabschnitten 11 des Magazinstreifens 1 angeordnet sein, so dass eine beiderseitige Verwendbarkeit ermöglicht wird. Je nach Werkstoffauswahl kann der Magazinstreifen 1 mit begrenzter Häufigkeit wieder verwendet werden.

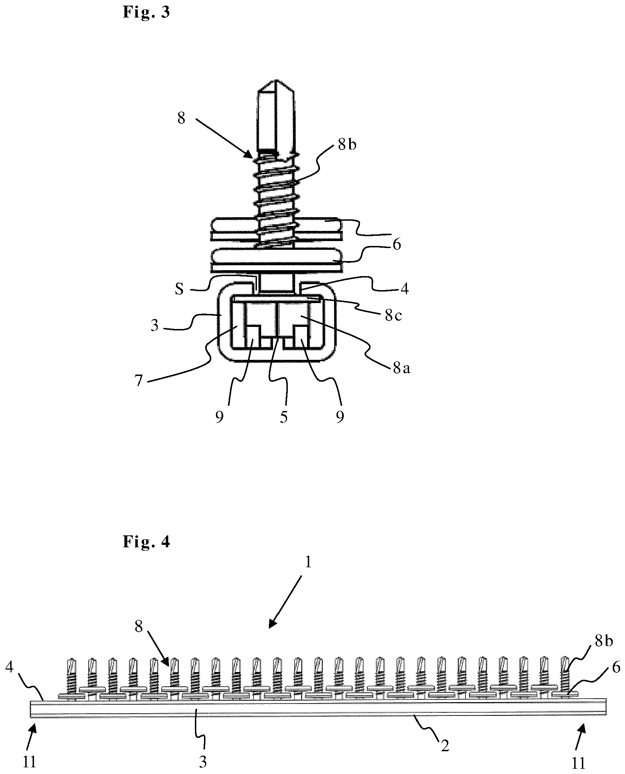

**Fig. 3** zeigt eine Frontansicht des erfindungsgemäßen Magazinstreifens in Richtung des Pfeils P in **Fig. 2**. Man erkennt, dass der Abstand der Spitzen der Zungen 9 von der Basiswand in etwa doppelt so hoch ist wie die Erhöhung 5, so dass ein sicheres Blockieren der Schrauben 8 im unbetätigten Zustand gewährleistet ist. Aus dieser Darstellung lässt sich gut erkennen, dass die Betätigungsmittel, welche die Zungen 9 bei Betätigung zurück in die Ebene der Basiswand 2 drängen sollen, nicht höher sein dürfen als die Höhe der Erhöhung 5, da ansonsten die Schraubenköpfe 8a nicht ungestört über die Erhöhung 5 hinweg gleiten könnten. Mit anderen Worten muss die Höhe der Erhöhung 5 zumindest der Höhe des Betätigungsmittels entsprechen. Aus der **Fig. 3** ist ebenfalls gut zu erkennen, dass der Aufnahmeraum 7 und die Erhöhung 5 derart aufeinander abgestimmt sind, dass sich die vorteilhafte Dreipunktlagerung für die Schraubenköpfe 8a einstellt. Die Schraubenköpfe 8a umfassen üblicher Weise an ihrer Unterseite eine einstückig mit dem Schraubenkopf 8a ausgebildete Unterlegscheibe 8c, welche einen etwas größeren Radius aufweist als der Schraubenkopf 8a, so dass der Schraubenkopf 8a mit seiner Oberseite auf der Erhöhung 5 aufliegt und die Unterlegscheibe 8c jeweils im Übergangsbereich der Seitenwände 3 und der freien Enden 4, ggf. auch an der Unterseite der freien Enden 4, anliegt. Der Spalt S ist im Übrigen so bemessen, dass die freien Enden 4 bzw. die Ränder den Schraubenschaft 8b nicht berühren.

In **Fig. 4** wird schließlich eine bevorzugte Anordnung der Dichtscheiben 6 auf den Schraubenschäften 8b in einer Seitenansicht illustriert. Bei dem verwendeten Magazinstreifen 1 handelt es sich um einen erfindungsgemäßen Magazinstreifen 1 mit Erhöhung 5, wie er in den **Fig. 1** - **3** beschrieben wird. Der Magazinstreifen 1 umfasst also jedenfalls eine Basiswand 2 sowie zwei sich von der Basiswand 2 im Wesentlichen senkrecht erstreckende Seitenwände 3, deren freie Enden 4 zu zwei einander gegenüberliegenden Rändern abgewinkelt sind, wobei ein Aufnahmeraum 7 für die Befestigungselement- bzw. Schraubenköpfe 8a und ein Durchgangsspalt S für die Befestigungselement- bzw. Schraubenschäfte 8b gebildet wird. In dem Magazinstreifen 1 sind mehrere Schrauben 8 aufeinanderfolgend angeordnet, wobei die Schrauben 8 Schraubenköpfe 8a (ggf. auch mit Unterlegscheiben 8c) und Schraubenschäfte 8b mit darauf aufgebrachten Dichtscheiben 6 aufweisen. Die Dichtscheiben 6 der aufeinanderfolgenden Schrauben 8 sind auf alternierende Weise etwas höher und etwas tiefer bezüglich der abgewinkelten Enden 4 des Magazinstreifens 1 am Schraubenschaft 8b angeordnet. Vorzugsweise sind die tiefer liegenden Dichtscheiben 6 jeweils knapp über den abgewinkelten Enden 4 des Magazinstreifens 1 angeordnet und die höher liegenden Dichtscheiben 6 jeweils knapp über den benachbarten, tiefer liegenden, Dichtscheiben 6. Dadurch, dass sich die Dichtscheiben 6 nicht (oder nur unwesentlich) gegenseitig berühren bzw. die Oberseite der freien Enden 4 des Magazinstreifens 1 nicht (oder nur unwesentlich) berühren, aber sehr nahe beieinander bzw. sehr nahe am Magazinstreifen angeordnet sind, kann ein besonders effizienter Vorschub erreicht werden - ohne ein Aufstauen bzw. Aufschuppen der einzelnen Dichtscheiben 6 und ein Verkippen der Schrauben 8. Durch Verwendung eines erfindungsgemäßen Magazinstreifens mit Erhöhung 5 (und ggf. mit der oben beschriebenen Dreipunktlagerung) kann die Effizienz des Vorschubs noch weiter erhöht werden.

### Bezugszeichenliste:

- 1: Magazinstreifen
- 2: Basiswand
- 3: Seitenwände
- 4: freie Enden bzw. Ränder
- 5: Erhöhung
- 6: Dichtscheiben
- 7: Aufnahmeraum
- 8: Schrauben
- 8a: Schraubenköpfe
- 8b: Schraubenschäfte
- 8c: Unterlegscheiben
- 9: Zungen
- 10: Sperrglied
- 11: Endabschnitte
- S: Spalt
- P: Pfeil

## Patentansprüche

1. Magazinstreifen (1) zur Aufnahme von Befestigungselementen (8) mit Befestigungselementköpfen (8a) und Befestigungselementschäften (8b), welcher in eine Zuführeinrichtung eines Befestigungselement-Setzgerätes einsetzbar ist und welcher eine Basiswand (2) sowie zwei sich von der Basiswand (2) im Wesentlichen senkrecht erstreckende Seitenwände (3), deren freie Enden (4) zu zwei einander gegenüberliegenden Rändern abgewinkelt sind, aufweist wobei ein Aufnahmeraum (7) für die Befestigungselementköpfe (8a) und ein Durchgangsspalt (S) für die Befestigungselementschäfte (8b) gebildet wird, und wobei die Basiswand (2) an zumindest einem Endabschnitt (11) des Magazinstreifens (1) ein elastisch federndes Sperrglied (10) aufweist, welches von einem korrespondierenden Betätigungsmittel der Zuführvorrichtung des Befestigungselement-Setzgerätes betätigbar ist, wobei das Sperrglied (10) im unbetätigten Zustand in den Aufnahmeraum (7) hineinragt und die Befestigungselemente (8) im Magazinstreifen (1) zurückhält und wobei das Sperrglied (10) im betätigten Zustand von dem Betätigungsmittel aus dem Aufnahmeraum (7) hinausgedrängt wird und die Befestigungselemente (8) freigibt,
**dadurch gekennzeichnet, dass**
sich von der Basiswand (2) eine mittig angeordnete Erhöhung (5), auf welcher die Köpfe (8a) der Befestigungselemente (8) aufliegen, in den Aufnahmeraum (7) hinein erstreckt, welche in ihrer Höhe derart bemessen ist, dass die Befestigungselemente (8) das Sperrglied (10) und das Betätigungsmittel im betätigten Zustand sicher überwinden können.

2. Magazinstreifen (1) nach Anspruch 1, **dadurch gekennzeichnet, dass** die Höhe der Erhöhung (5) zumindest der Höhe des Betätigungsmittels entspricht.

3. Magazinstreifen (1) nach einem der vorhergehenden Ansprüche, **dadurch gekennzeichnet, dass** das Betätigungsmittel als zumindest ein flacher, länglicher Zacken aus einem starren Material ausgebildet ist.

4. Magazinstreifen (1) nach einem der vorhergehenden Ansprüche, **dadurch gekennzeichnet, dass** das elastisch federnde Sperrglied (10) einstückig mit dem Magazinstreifen (1) ausgebildet ist.

5. Magazinstreifen (1) nach einem der vorhergehenden Ansprüche, **dadurch gekennzeichnet, dass** das elastisch federnde Sperrglied (10) zumindest eine aus der Ebene der Basiswand (2) ausgestanzte Zunge (9) aufweist.

6. Magazinstreifen (1) nach einem der vorhergehenden Ansprüche, **dadurch gekennzeichnet, dass** der Aufnahmeraum (7) und die Erhöhung (5) derart aufeinander abgestimmt sind, dass sich eine Dreipunktlagerung für die Befestigungselementköpfe (8a) einstellt.

7. Magazinstreifen (1) nach einem der vorhergehenden Ansprüche, **dadurch gekennzeichnet, dass** sich die Erhöhung (5) über die gesamte Länge des Magazinstreifens (1) erstreckt.

## Claims

1. A magazine strip (1) for receiving fastening elements (8) with fastening element heads (8a) and fastening element shafts (8b), which can be inserted into a feed device of a fastening element setting tool and which comprises a base wall (2) and two side walls (3) extending substantially vertically from the base wall (2), whose free ends (4) are angled to two opposite edges, wherein a receiving space (7) for the fastening element heads (8a) and a passage gap (S) for the fastening element shafts (8b) is formed, and wherein the base wall (2) comprises, at at least one end portion (11) of the magazine strip (1), an elastically resilient locking member (10) which can be actuated by a corresponding actuating means of the feed device of the fastening element setting tool, wherein the locking member (10) in the unactuated state projects into the receiving space (7) and retains the fastening elements (8) in the magazine strip (1), and wherein the locking member (10) in the actuated state is forced out of the receiving space (7) by the actuating means and releases the fastening elements (8),
**characterised in that**
a centrally arranged elevation (5), on which the heads (8a) of the fastening elements (8) rest, extends from the base wall (2) into the receiving space (7), the height of which is dimensioned such that the fastening elements (8), in the actuated state, can safely overcome the locking member (10) and the actuating means.

2. The magazine strip (1) according to claim 1, **characterized in that** the height of the elevation (5) corresponds at least to the height of the actuating means.

3. The magazine strip (1) according to one of the preceding claims, **characterized in that** the actuating means is formed as at least one flat, elongated tooth of a rigid material.

4. The magazine strip (1) according to one of the preceding claims, **characterized in that** the elastically resilient locking member (10) is formed integrally with the magazine strip (1).

5. The magazine strip (1) according to one of the preceding claims, **characterized in that** the elastically resilient locking member (10) has at least one tongue (9) punched out from the plane of the base wall (2).

6. The magazine strip (1) according to one of the preceding claims, **characterized in that** the receiving space (7) and the elevation (5) are matched to one another in such a way that a three-point bearing arrangement for the fastening element heads (8a) is achieved.

7. The magazine strip (1) according to one of the preceding claims, **characterized in that** the elevation (5) extends over the entire length of the magazine strip (1).

## Revendications

1. Bande-magasin (1) pour recevoir des éléments de fixation (8) avec des têtes d'éléments de fixation (8a) et des tiges d'éléments de fixation (8b), laquelle est insérable dans le dispositif d'alimentation d'un outil de pose d'éléments de fixation et comporte deux parois latérales (3) qui s'étendent sensiblement verticalement à partir de la paroi de base (2) et dont les extrémités libres (4) sont coudées en formant deux bords en vis-à-vis, un logement (7) pour les têtes d'éléments de fixation (8a) et un interstice de passage (S) pour les tiges d'éléments de fixation (8b) étant formé, et la paroi de base (2) comportant en au moins une portion extrême (11) de la bande-magasin (1) un élément d'arrêt à effet ressort (10) qui est actionnable par un moyen d'actionnement correspondant du dispositif d'alimentation de l'outil de pose d'éléments de fixation, l'élément d'arrêt (10) pénétrant, à l'état inactivé, dans le logement (7) et retenant les éléments de fixation (8) dans la bande-magasin (1), et l'élément d'arrêt (10) étant poussé, à l'état activé, par le moyen d'actionnement hors du logement (7) et libérant les éléments de fixation (8),
**caractérisée en ce que**
un relief disposé centralement (5), sur lequel reposent les têtes (8a) des éléments de fixation (8), fait saillie dans le logement (7) à partir de la paroi de base (2) et est dimensionné dans sa hauteur de façon qu'à l'état activé les éléments de fixation (8) puissent surmonter l'élément d'arrêt (10) et le moyen d'actionnement de manière sûre.

2. Bande-magasin (1) selon la revendication 1, **caractérisée en ce que** la hauteur du relief (5) correspond au moins à la hauteur du moyen d'actionnement.

3. Bande-magasin (1) selon l'une des revendications précédentes, **caractérisée en ce que** le moyen d'actionnement est conformé en au moins une pointe plate allongée en matériau rigide.

4. Bande-magasin (1) selon l'une des revendications précédentes, **caractérisée en ce que** l'élément d'arrêt à effet ressort (10) est conçu d'un seul tenant avec la bande-magasin (1).

5. Bande-magasin (1) selon l'une des revendications précédentes, **caractérisée en ce que** l'élément d'arrêt à effet ressort (10) comporte au moins une languette (9) découpée dans le plan de la paroi de base (2).

6. Bande-magasin (1) selon l'une des revendications précédentes, **caractérisée en ce que** le logement (7) et le relief (5) sont adaptés l'un à l'autre de façon à fournir aux têtes d'éléments de fixation (8a) un appui en trois points.

7. Bande-magasin (1) selon l'une des revendications précédentes, **caractérisée en ce que** le relief (5) s'étend sur toute la longueur de la bande-magasin (1).
